**Europäisches Patentamt**

**European Patent Office**

**Office européen des brevets**

(19)

(11) Veröffentlichungsnummer: **0 056 421**

**A1**

(12) # EUROPÄISCHE PATENTANMELDUNG

(21) Anmeldenummer: **81100261.7**

(22) Anmeldetag: **15.01.81**

(51) Int. Cl.³: **B 23 K 9/28**

(43) Veröffentlichungstag der Anmeldung:
**28.07.82 Patentblatt 82/30**

(84) Benannte Vertragsstaaten:
**AT CH DE FR GB IT LI NL**

(71) Anmelder: **Wallner, Manfred J.**
**Nümmener Strasse 53**
**D-5650 Solingen 1(DE)**

(72) Erfinder: **Wallner, Manfred J.**
**Nümmener Strasse 53**
**D-5650 Solingen 1(DE)**

(54) **Elektrode für einen Lichtbogenbrenner und deren Halterung.**

(57) Bei dieser Elektrode und deren Halterung wird ein Elektrodenhalter (3) verwendet, in welchem ein oder mehrere tonnenförmig gebogene Einzelkontakte (4) an einem Ende (5) so eingeklemmt sind, daß beim Einstecken einer zylinderförmigen Elektrode (1) oder des zylinderförmigen Elektrodenschaftes (2) in den Elektrodenhalter (3) eine Klemmung der Elektrode (1) mit sicherem Stromübergang erfolgt. Bei Plasma-Brennern kann die Elektrode (1) zusätzlich mit einer Verjüngung (9) versehen werden, welche in die Mittelbohrung eines isolierenden Ringes (10) eingesetzt wird. Dieser isolierende Ring (10), welcher gleichzeitig Bohrungen (11) zur Gasführung enthalten kann, wird in eine ringförmige Ausnehmung (12) der Gasdüse (13) gesetzt, wodurch die Elektrode (1) in ihrem Abstand zur Gasdüse (13) fixiert ist.

Bei im Brenner liegenden Elektroden ist an dem der Elektrodenspitze zugewandten Ende eine Nut (19) in der Mantelfläche der Elektrode (1) eingearbeitet, in welche der Hals (20) eines Schlüssels (21) eingreift, mit dem die Elektrode (1) aus dem Brenner gezogen werden kann.

Fig. 1

Fig. 4

## Elektrode für einen Lichtbogenbrenner und deren Halterung

Die Erfindung betrifft eine nichtabschmelzende Elektrode für einen Lichtbogenbrenner, vorwiegend zum Schweißen und Schneiden, welche nicht direkt gekühlt wird, sondern in einem wassergekühlten, gasgekühlten, luftgekühlten oder ungekühlten Halter innerhalb des Brenners montiert wird.

Nichtabschmelzende Elektroden dienen in Schweiß- und Schneidbrennern als Kathode zur Übertragung eines Lichtbogens auf das zu schneidende oder schweißende Werkstück oder als Kathode zur Übertragung eines Lichtbogens auf eine düsenförmig ausgebildete Anode bei frei brennenden Lichtbögen.

Diese, an sich bekannte Ausführung einer Elektrode, wird nach dem bekannten Verfahren in einer meist einfach oder mehrfach geschlitzten Spannzange gehalten, welche mit ihren kegelförmigen oder balligen Enden in eine kegelförmige Ausnehmung des Brenners gepreßt wird und so die Elektrode festklemmt.

Zum Nachstellen oder Auswechseln der Elektrode muß der Druck auf die Spannzange gelöst werden, um die Klemmung der Elektrode zu lösen. Ein selbstständiges Nachstellen der Elektrode ist damit nicht möglich.

Es fällt der Nachteil bestehender Elektrodenhalterungen fort, durch Krafteinwirkung auf eine Spannzange die Elektrode festhalten zu müssen. Insbesondere bei Plasma-Brennern, bei welchem der Abstand zwischen Anode und Kathode enorm wichtig ist, führt das Festziehen der Elektrode in den meisten Fällen zu einer Veränderung des vorjustierten Abstandes.

Aufgabe der Erfindung ist es, eine Elektrode mit der dazugehörigen Aufnahmevorrichtung anzugeben, welche die Elektrode immer sicher an dem gewählten Punkt festhält oder die Elektrode gleitend aufnimmt ohne dabei den elektrischen Übergang zu verschlechtern sowie bei gleitenden Bewegungen der Elektrode unter Strombelastung eine Beschädigung durch Funkenbildung oder Festbrennen zu verhindern.

Durch die Erfindung werden im wesentlichen zwei bedeutende Vorteile erreicht. Zum Einen kann die Kühlung des Brenners bis in unmittelbare Nähe der Elektrode geführt werden und somit die auftretende Strahlungswärme unmittelbar an ihrem Entstehungsort abgeführt werden, was bei gleicher Brennergröße zu einer höheren Strombelastbarkeit führt oder bei gleicher Strombelastung zu einer Miniaturisierung des Brenners führen kann.

Zum Anderen wird durch die selbsttätige Klemmung der Elektrode im innengefederten Aufnahmeschaft eine zuverlässige Positionierung in der eingestellten Position erreicht, bei gleichzeitigem, hervorragendem Stromübergang. Die Elektrode kann z.B. in Plasma-Brennern mittels einer Abstandslehre in den Brenner eingesetzt werden ohne weitere Sicherungsmaßnahmen vornehmen zu müssen. Bei Verwendung von keramischen Zentriereinsätzen in der Düse kann die Elektrode ohne jede Lehre zusammen mit der Düse eingesetzt werden ohne Rücksicht auf den Abstand nehmen zu müssen. Die Brenner werden damit bedienungsfreundlicher. Die Schweiß- oder Schneidergebnisse hängen damit nicht mehr von der Sorgfalt des Bedienungspersonals beim Zusammenbau der Brenner ab.

Die Abbildung zeigen die der Erfindung zugrunde gelegten Möglichkeiten der Elektrode und Elektrodenaufnahme.

Fig. 1 Elektrode mit Aufnahmeschaft für innengefederte Elektrodenhalterung für wassergekühlte Ausführung.

Fig. 2 Elektrode mit Aufnahmeschaft für innengefederte Elektrodenhalterung für Luft- oder gasgekühlte Ausführung.

Fig. 3 Elektrode mit zylindrischem Durchmesser für innengefederte Elektrodenhalterung.

Fig. 4 Elektrode mit kegeligem Ende und federndem Anpresskontakt mit drahtgefedertem Stromübergang.

Fig. 5 Elektrode mit zylindrischem Ende und gefedertem Anpresskörper mit drahtgefedertem Stromübergang.

Fig. 6 Spezialschlüssel zum Anziehen der Elektrode bei im Brenner liegenden Elektroden.

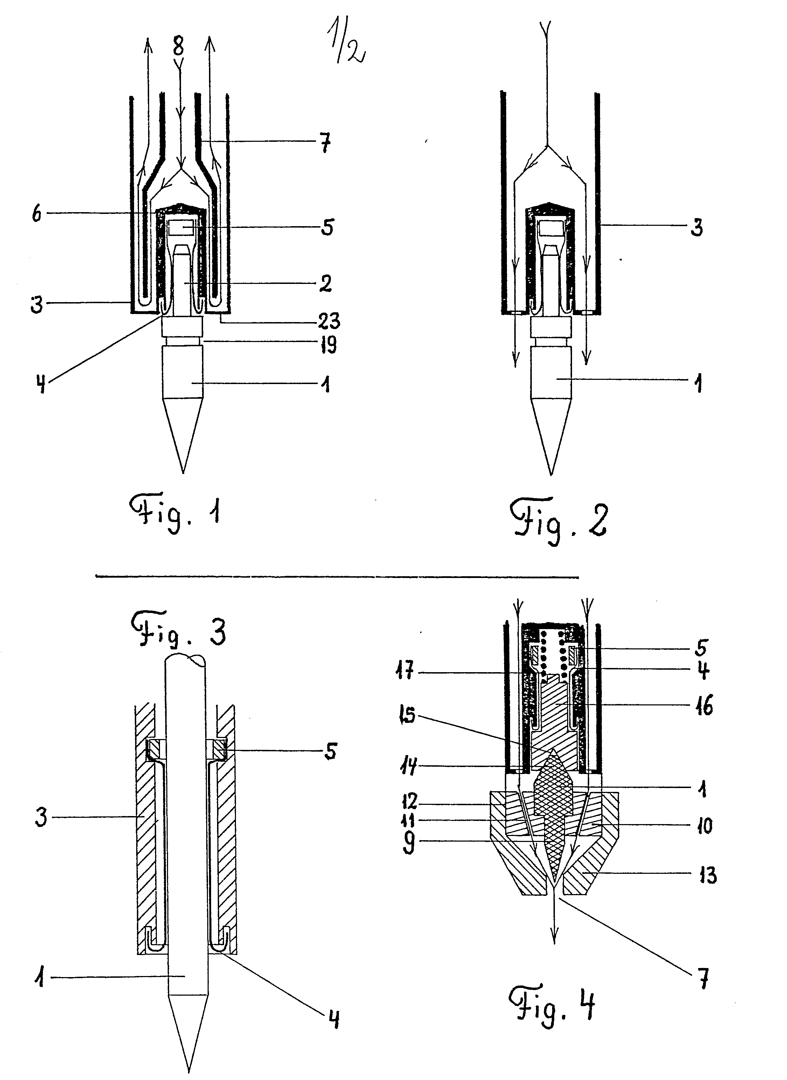

Fig. 1   zeigt eine Elektrode ( 1 ) aus hochschmelzendem Werkstoff wie z.B. Wolfram mit verjüngtem zylindrischem Aufnahmeschaft ( 2 ) der in eine Elektrodenhalterung ( 3 ) eingeführt wird, welche mit einer Vielzahl von gefederten Einzeldrähten ( 4 ) bestückt sind, die an einem Ende ( 5 ) geklemmt und fest mit dem Körper des Halters verbunden sind und damit über eine Vielzahl von Oberflächenkontakten den Stromfluß auf den Aufnahmeschaft ( 2 ) der Elektrode ( 1 ) aufrecht halten. Der Schaft ( 6 ) der Kontaktfedern ( 4 ) ist damit vom Kühlmittel ( 8 ) des Brenners umflossen. Ein den Schaft umgebendes Wasserführungsrohr ( 7 ) sorgt für eine gleichbleibende Strömungsgeschwindigkeit des Kühlmittels und damit eine gleichbleibende Wärmeabfuhr. Durch die klemmende Wirkung der tonnenförmig gebogenen Kontaktdrähte ( 4 ) wird die Elektrode ( 1 ) sicher in der eingesetzten Position gehalten.

Fig. 2   zeigt eine Elektrode ( 1 ) der vorbeschriebenen Art, wobei der Elektrodenhalter ( 3 ) nicht wassergekühlt, sondern gasdurchflossen ist. Dies kann sowohl ein Gas sein, welches im weiteren Verlauf zur Abschirmung der Elektrode verwendet wird wie z.B. Argon, Helium, Stickstoff, $CO_2$ o.ä. oder auch komprimierte Luft, welche zur weiteren Kühlung des Brenners verwendet werden kann.

Fig. 3   Eine weitere Möglichkeit der Halterung bei gleichzeitiger Möglichkeit einer axialen Verstellung von zylindrischen Elektroden zeigt Fig. 3. Die Elektrode ( 1 ) wird sicher in der jeweiligen Position festgehalten, läßt sich jedoch ohne Schwierigkeiten längsverstellen ohne eine Funkenbildung oder ein Festbrennen bei einer Verstellung unter Stromfluß in Kauf nehmen zu müssen, wobei wiederum die Kontaktfedern ( 4 ) sowohl die Aufgabe der Elektrodenzentrierung-und klemmung wie des Stromübergangs übernehmen.

Fig. 4   zeigt eine Möglichkeit, welche sich insbesondere für Plasma-Brenner kleinerer Leistung anbietet. Die Elektrode ( 1 ) mit einem zylindrisch abgesetzten Vorderteil ( 9 ) wird in einem isolierenden Ring ( 10 ) eingesetzt, welcher vorzugsweise gleichzeitig die Gaskanäle ( 11 ) für das plasmabildende Gas enthält. Dieser isolierende Gasverteiler(10 ) sitzt wiederum in einer zylindrischen Ausnehmung ( 12 ) der Plasma-Einschnürdüse ( 13 ) . Somit bilden Elektrode ( 1 ), Gasring ( 10 ) und Einschnürdüse ( 13 ) eine Einheit, wobei der Abstand zwischen Elektrode ( 1 ) und Düse ( 3 ) immer exakt eingehalten wird und auch die Elektrode ( 1 ) einwandfrei zentriert mittig der Düsenbohrung sitzt. Das Elektrodenende ( 14 ) ist keglig oder ballenförmig ausgeführt und greift in eine kegelförmige Ausnehmung ( 15 ) eines gefederten Druckkörpers ( 16 ) aus elektrisch gut leitendem Material, welcher wiederum in den gefederten Einzelkontakten ( 4 ) des in Fig. 1 beschriebenen Kontaktkörpers ( 3 ) sitzt . Dieser wiederum kann gas- oder flüssigkeitsgekühlt sein, wie bereits in Fig. 2 beschrieben. Die Feder ( 17 ) sorgt für eine einwandfreie Anpressung des Druckkörpers ( 16 ) auf das kegelförmige Ende ( 14 ) der Elektrode ( 1 ), was bei gleichen Flankenwinkeln eine gute kraftschlüssige Verbindung ergibt und damit eine einwandfreie Stromübergabe bewirkt.

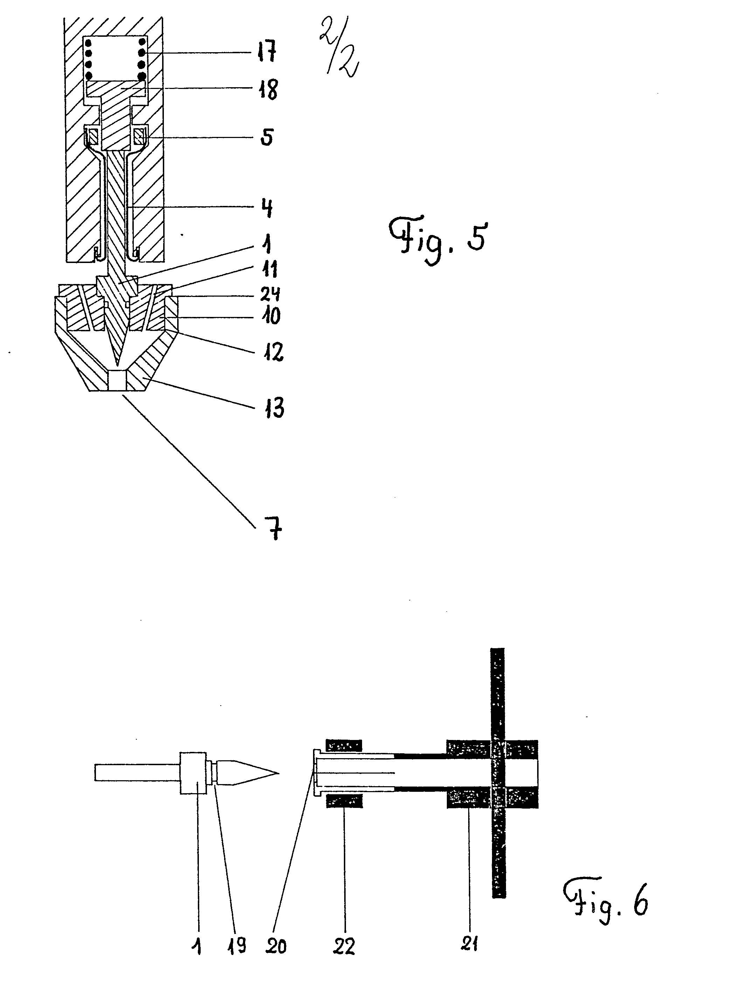

Fig. 5 Anstelle des Druckkörpers ( 16 ) kann auch eine Elektrode ( 1 ) wie in Fig. 1 beschrieben, mit zylindrischem Ende verwendet werden, welche direkt in die gefederten Einzelkontakte ( 4 ) des Kontaktkörpers ( 6 ) eingreift, wobei ein gefederter Druckkörper ( 18 ) gemäß Fig. 5 die Elektrode ( 1 ) in die richtige Position zur Düse bringt und sicher in dieser Position hält.

Fig. 6 zeigt die Anwendung eines Spezialschlüssels ( 21 ) , welcher mit seinem durch Längsschlitzung gefederten Hals ( 20 ) in die ringförmige Nut ( 19 ) der Elektrode ( 1 ) eingreift. Durch Verschieben des Ringes ( 22 ) in Richtung Elektrode ( 1 ) wird die Elektrode festgeklemmt und kann somit aus dem Brenner gezogen werden. Durch Verschieben des Ringes ( 22 ) in die entgegengesetzte Richtung öffnet sich der gefederte Hals ( 20 ) des Spezialschlüssels ( 21 )und die Elektrode ( 1 ) kann entnommen werden. Falls die Elektrode ( 1 ),wie in Fig. 1 dargestellt, einen abgesetzten Aufnahmeschaft ( 2 ) aufweist, kann das flache Ende( 23 ) des Elektrodenhalters ( 3 ) als Anschlagfläche für die Elektrode verwendet werden, wobei bei definierter Länge der Elektrodenspitze eine Justierung der Elektrode ( 1 ) zur Düse ( 13 ) entfällt. In diesem Fall wird der Spezialschlüssel ( 21 ) auch zum Einsetzen der Elektrode in den Brenner verwendet.

A n s p r ü c h e

1. Elektrode für einen Lichtbogenbrenner und deren Halterung vorwiegend für Schweiß- und Schneidbrenner mit nichtabschmelzender Elektrode und offenem Lichtbogen sowie für Plasma-Brenner, wobei die Elektrode nicht vom Kühlmittel durch-oder umflossen wird, sondern in einem wassergekühlten, gasgekühlten, luftgekühlten oder ungekühlten Halter innerhalb des Brenners gehalten wird.
Dieser Elektrodenhalter ist mit mindestens einem gefederten Kontakt ( 4 ) ausgerüstet, dessen eines Ende in festem Kontakt ( 5 ) mit dem Elektrodenhalter ( 3 ) steht und zur Stromübergabe gegen den zylinderförmigen Schaft ( 2 ) der Elektrode drückt.

2. Elektrode und deren Halterung nach Anspruch 1, dadurch gekennzeichnet, daß der die Elektrode aufnehmende Halter mehrere gefederte Kontakte ( 4 ) aufweist.

3. Elektrode und deren Halterung nach den Ansprüchen 1-2, dadurch gekennzeichnet, daß die Federwirkung der Kontakte ( 4 ) und der Kontaktdruck auf die Elektrode ( 1 ) durch eine Verbiegung in Tonnen- oder Bogenform des als Kontaktwerkstoff verwendeten Materials erfolgt.

4. Elektrode und deren Halterung nach den Ansprüchen 1-3, dadurch gekennzeichnet, daß die Halterung ( 3 ) flüssigkeitsgefüllt ist.

5. Elektrode und deren Halterung nach den Ansprüchen 1-3, dadurch gekennzeichnet, daß die Halterung ( 3 ) gasgekühlt ist.

6. Elektrode und deren Halterung ( 3 ) nach den Ansprüchen 1-3, dadurch gekennzeichnet, daß die Halterung ungekühlt ist.

7. Elektrode und deren Halterung nach den Ansprüchen 1-6, dadurch gekennzeichnet, daß die Elektrode ( 1 ) mit einem kegel - oder ballenförmigen Ende ( 4 ) gegenüber der Elektrodenspitze ausgestattet ist, welches in einem mit einer kegelförmigen Ausnehmung gleichen Winkels versehenen Druckkörper ( 16 ) eingreift, welcher in einem Elektrodenhalter ( 3 ) gemäß den Ansprüchen 1-6 geführt wird, der wiederum durch Federwirkung ( 7 ) auf das kegelförmige Ende ( 4 ) der Elektrode ( 1 ) gepreßt wird, wobei eine formschlüssige Verbindung zwischen Elektrode und Druckkörper mit gutem Stromübergang erreicht wird.

8. Elektrode und deren Halterung nach den Ansprüchen 1-7, dadurch gekennzeichnet, daß die Elektrode in einem isolierten Ring ( 10 ) geführt wird, welcher die Elektrode in axialer Richtung justiert und mittig zentriert.

9. Elektrode und deren Halterung nach dem Anspruch 8, dadurch gekennzeichnet, daß der Gasführungsring ( 19 ) tangentiale zur Elektrode ( 1 ) liegende Bohrungen ( 11 ) enthält.

10. Elektrode und deren Halterung nach dem Anspruch 8, dadurch gekennzeichnet, daß der Gasführungsring ( 10 ) parallel zur Elektrodenachse liegende Gasführungsnuten ( 11 ) enthält.

11. Elektrode und deren Halterung nach den Ansprüchen 8-10, dadurch gekennzeichnet, daß der Ring ( 10 ) durch eine zylinderförmige Ausnehmung ( 12 ) der Einschnürdüse ( 13 ) zentriert ist.

12. Elektrode und deren Halterung nach den Ansprüchen 8-10, dadurch gekennzeichnet, daß der Ring ( 10 ) einen planparallelen Ansatz ( 24 ) besitzt, durch welchen der Ring (10) mit der Elektrode ( 1 ) in der Eintauchtiefe zur Einschnürdüse begrenzt wird.

13. Elektrode und deren Halterung nach den Ansprüchen 8-12, dadurch gekennzeichnet, daß Elektrode ( 1 ), Ring ( 10 ) und Einschnürdüse (13 ) einzelne Teile sind, welche zu einer Einheit zusammengesteckt werden können.

14. Elektrode und deren Halterung nach den Ansprüchen 8-12, dadurch gekennzeichnet, daß der Ring ( 10 ) und Düse ( 13 ) eine nicht demontierbare Einheit darstellen, in welche die Elektrode ( 1 ) eingesetzt wird.

15. Elektrode und deren Halterung nach den Ansprüchen 8-12, dadurch gekennzeichnet, daß Elektrode ( 1 ) Ring ( 10 ) und Düse ( 13 ) eine nicht demontierbare Einheit darstellen.

16, Elektrode und deren Halterung nach den Ansprüchen 1-14, dadurch gekennzeichnet, daß die Elektrode ( 1 ) durch einen gefederten Druckkörper ( 16 ) in den Ring ( 10 ) und dieser in die Düse ( 13 ) gepreßt wird und damit der Abstand zwischen Düse und Werkstück in der variablen Größe in allen Lagen sicher eingehalten wird.

17. Elektrode nach den Ansprüchen 1-16, dadurch gekennzeichnet, daß die Elektrode ( 1 ) eine ringförmige Nut ( 19 ) aufweist, in welche der Hals ( 20 ) eines Spezialschlüssels ( 21 ) eingreift, mit welchem die Elektrode bei im Brenner liegendem Elektrodenhalter ( 3 ) eingesetzt und ausgezogen werden kann.

0056421

Fig. 1

Fig. 2

Fig. 3

Fig. 4

Fig. 5

Fig. 6

**0056421**

Nummer der Anmeldung

EP 81 10 0261

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CH - A - 269 559 (PHILIPS)<br>  * Ansprüche *<br>& GB - A - 622 022<br>& NL - C - 69 590<br>& BE - A - 464 488<br><br>-- | 1,2 |
|  | FR - A - 2 035 653 (BRITISH RAIL-WAYS)<br>  * Seite 4 *<br>& DE - B - 2 007 126<br>& CH - A - 513 566<br>& US - A - 3 628 079<br><br>-- | 9 |
|  | US - A - 3 813 510 (THERMAL DYNA-MICS)<br>   * Abbildung 1 *<br>& FR - A - 2 258 078<br>& DE - A - 2 404 129<br>& GB - A - 1 489 495<br><br>-- | 7,8 |
|  | US - A - 4 194 107 (KLASSON)<br>   * Abbildungen 4,5 *<br><br>---- | 7,17 |

**KLASSIFIKATION DER ANMELDUNG (Int Cl ⁹)**

B 23 K 9/28

**RECHERCHIERTE SACHGEBIETE (Int Cl.³)**

B 23 K 9/28
       9/24
       9/26
H 05 H 1/34
       1/38

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie, übereinstimmendes
   Dokument

Der vorliegende Recherchenbericht wurde für alle Patentansprüche erstellt.

| Recherchenort | Abschlußdatum der Recherche | Prüfer |
|---|---|---|
| Den Haag | 05-10-1981 | HOORNAERT |

EPA form 1503.1   06.78